(19)

Europäisches Patentamt
European Patent Office
Office européen des brevets

(11) **EP 4 206 775 A1**

(12) **EUROPEAN PATENT APPLICATION**

(43) Date of publication:
**05.07.2023 Bulletin 2023/27**

(21) Application number: **22216296.8**

(22) Date of filing: **23.12.2022**

(51) International Patent Classification (IPC):
**G02B 6/44** (2006.01)

(52) Cooperative Patent Classification (CPC):
**G02B 6/4403; G02B 6/448**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2021 IN 202111061474**

(71) Applicant: **Sterlite Technologies Limited Haryana 122002 (IN)**

(72) Inventor: **Shukla, Vikash 122002 Gurugram (IN)**

(74) Representative: **Petraz, Gilberto Luigi et al GLP S.r.l.
Viale Europa Unita, 171
33100 Udine (IT)**

(54) **OPTICAL FIBER CABLE WITH COMPRESSED CORE AND MANUFACTURING METHOD THEREOF**

(57) The present disclosure relates to a compressed core (206, 306) and a manufacturing method thereof. The method includes bundling optical transmission elements (202, 302) to form a core (206, 306), compressing the core (206, 306), extruding a sheath (212, 312) around the compressed core (206, 306). The core (206, 306) is compressed to a smaller diameter by a compression tool with a cylindrical cavity. And, the core enters from the first end of the compression tool with a diameter d and exits from the second end with a diameter d-Δd, such that Δd/d is greater than or equal to 0.05.

*500*

```
┌─────────────────────────────────────────────────┐
│  Pay-off a plurality of optical transmission elements  │──── 502
└─────────────────────────────────────────────────┘
                        ↓
┌─────────────────────────────────────────────────┐
│  Bundle the plurality of optical transmission elements to form a  │──── 504
│            core of an optical fiber cable                         │
└─────────────────────────────────────────────────┘
                        ↓
┌─────────────────────────────────────────────────┐
│                  Compress the core                      │──── 506
└─────────────────────────────────────────────────┘
                        ↓
┌─────────────────────────────────────────────────┐
│       Extrude a sheath around the compressed core        │──── 508
└─────────────────────────────────────────────────┘
                        ↓
┌─────────────────────────────────────────────────┐
│            Take-up the optical fiber cable              │──── 510
└─────────────────────────────────────────────────┘
```

**FIG. 5**

EP 4 206 775 A1

## Description

### TECHNICAL FIELD

Embodiments of the present disclosure relate to the field of telecommunications cables and more particularly relates to an optical fiber cable with a compressed core and manufacturing method thereof.

This application claims the benefit of Indian Application No. 202111061474 titled "Optical Fiber Cable With Compressed Core And Manufacturing Method Thereof" filed by the applicant on 29/12/2021, which is incorporated herein by reference in its entirety.

### BACKGROUND ART

Optical fiber ribbons, in which a plurality of single-core optical fibers arranged parallel to one another are collectively coated with a common resin, are known. Such an optical fiber ribbon allows a large amount of information to be transmitted therethrough and is easily handled.

Optical fiber cables are a critical component of modern communications network across the globe. During installation, it is desired to have an optical fiber cable (e.g., high fiber count Intermittent Bonded Ribbon (IBR) cable) with a smaller diameter to be used with small ducts as the optical fiber cable with the smaller diameter has reduced cable weight and is easier to handle and blow. But one also needs to take care of optical attenuation while reducing the diameter of the optical fiber cable when packing a certain number of optical fiber ribbons i.e., forming a bundle of the optical fiber ribbons.

A prior art reference "CN105729754B" discloses the use of a film wound around a fiber bundle exerting force.

Another prior art reference "JP2017026754A" teaches the use of PET tape as presser wound layer. However, if the binders and other binding elements such as film, PET tape, are wound with high tension to press the bundle of the optical fiber ribbons, a lot of pressure is exerted on point of contacts of the binders and other binding elements that cause optical and mechanical degradation in optical fibers of the bundle.

However, there are a few drawbacks in the currently similar technologies. Thus, in the light of the above-stated discussion, there is a need to ameliorate one or more of the aforementioned disadvantages. Thus, the present disclosure provides a solution to reduce the diameter of the optical fiber cable without causing optical and mechanical degradation.

### SUMMARY OF THE DISCLOSURE

Embodiments of the present disclosure providea method of manufacturing an optical fiber cable. In particular, the method comprises the steps of bundling a plurality of optical transmission elements to form a core of the optical fiber cable, compressing the core, and extruding a sheath around the compressed core. In particular, the core is compressed to a smaller diameter by a compression tool. Moreover, the compression tool has a cylindrical cavity. Furthermore, the internal diameter of the cylindrical cavity gradually decreases from the first end to the second end of the compression tool. Further, the core enters from the first end of the compression tool with a diameter d and exits from the second end with a diameter d-$\Delta$d, such that $\Delta$d/d is greater than or equal to 0.05.

According to the first aspect of the present disclosure, bundling the plurality of optical transmission elements comprises providing the first layer around the plurality of optical transmission elements.

According to a second aspect of the present disclosure, the core is compressed while providing the first layer.

In accordance with an embodiment of the present disclosure, the core is compressed while extruding the sheath.

According to a third aspect of the present disclosure, the second layer of binders, aramid yarns, glass roving yarns, water-swellable yarns, a water blocking tape, a metal tape, fire retardant tape, cushioning layer and a loose tube is applied before extruding the sheath.

According to a fourth aspect of the present disclosure,the sheath is extruded around a first layer or a second layer such that a fiber packing density is greater than or equal to 0.35. In particular, the fiber packing density is defined as a total cross sectional area of all of the plurality of optical transmission elements in the core of the optical fiber cable divided by a cross sectional area of an inner surface of the sheath.

In accordance with an embodiment of the present disclosure, the core is compressed at least radially.

In accordance with an embodiment of the present disclosure, the core is compressed at least 5% such that an optical attenuation of the plurality of optical transmission elements is less than 0.30dB/Km at 1550nm. In particular, the compression is measured by a reduction in an inner diameter of the sheath.

According to a fifth aspect of the present disclosure, the optical fiber cable further comprises a first layer around the plurality of optical transmission elements.

In accordance with an embodiment of the present disclosure, the core is compressed at least radially.

The foregoing solutions of the present disclosure are attained by employing an optical fiber cable with a compressed core.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating a comparison between a core diameter before core compression and after core compression in accordance with an embodiment of the present disclosure;
Fig. 2 is a pictorial snapshot illustrating an example optical fiber cable with a compressed core in accordance with one embodiment of the present disclosure;
Fig. 3 is a pictorial snapshot illustrating an example optical fiber cable with a compressed core in accordance with another embodiment of the present disclosure;
Fig. 4 is a block diagram illustrating various units used for manufacturing an optical fiber cable in accordance with an embodiment of the present disclosure;
Fig. 5 is a flow chart illustrating a method for manufacturing the optical fiber cable in accordance with an embodiment of the present disclosure.

## REFERENCE LIST

Optical fiber cable - 110
Core - 112
First layer - 114
Second layer - 116
Third layer - 118
Optical fiber cable - 120
Compressed core - 122
First layer - 124
Second layer - 126
Third layer - 128
One or more bundles of intermittently bonded ribbons (IBRs) - 112a, 122a
Optical fiber cable - 200, 300
Plurality of optical transmission elements - 202, 302
One or more bundles of intermittently bonded ribbons (IBRs) 204, 304
Compressed core - 206, 306
First layer - 208, 308
Second layer - 210, 310
Third layer - 212, 312
System - 400
Pay-off unit - 402
Bundling unit - 404
Compression unit - 406
Sheath extrusion unit - 408
Take-up unit - 410

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

**DESCRIPTION OF EMBODIMENTS**

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

ITU.T, stands for International Telecommunication Union-Telecommunication Standardization Sector, is one of the three sectors of the ITU. The ITU is the United Nations specialized agency in the field of telecommunications and is responsible for studying technical, operating and tariff questions and issuing recommendations on them with a view to standardizing telecommunications on a worldwide basis.

Sheathing (extrusion) is done at a high temperature (preferably more than 100°C). The sheathing is a process of squeezing a molten sheathing material through a funnel of a die as the core runs through the center.

Crush resistance is an ability of a cable to withstand and/or recover from the effects of a compressive force.

Optical attenuation or attenuation in fiber optics, also known as transmission loss, is the reduction in the intensity of the light beam (or signal) with respect to distance travelled through a transmission medium.

It may be noted that the terms core and compressed core may be used interchangeably depending upon the context described herein.

It may be noted that the terms compression tool and mechanical tool may be used interchangeably depending upon the context described herein.

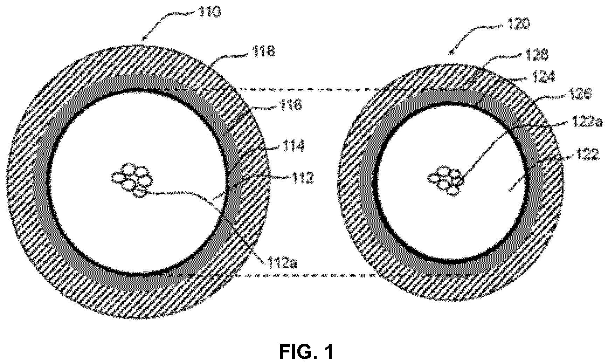

Fig. 1 is a pictorial snapshot illustrating a comparison between a core diameter before core compression and after core compression in accordance with an embodiment of the present disclosure. The optical fiber cable 110 has a core 112, a first layer 114, a second layer 116 (optional), a third layer 118 has a larger diameter as compared to an optical fiber cable 120 having a compressed core 122, a first layer 124, a second layer 126 (optional) and a third layer 128. The core 112, 122 may have one or more bundles of intermittently bonded ribbons (IBRs)112a, 122a. In particular, the intermittently bonded optical fiber ribbon is formed by intermittently bonding a plurality of optical transmission elements with a matrix material that imparts a bending and rolling capability along a width of the intermittently bonded optical fiber ribbon. Moreover, one or more bundles of IBRs112a are compressed to a smaller diameter bundle 122a and another layering may be added/extruded further to form the optical fiber cable120, such as sheathing with reduced diameter may be carried out on the smaller core122.

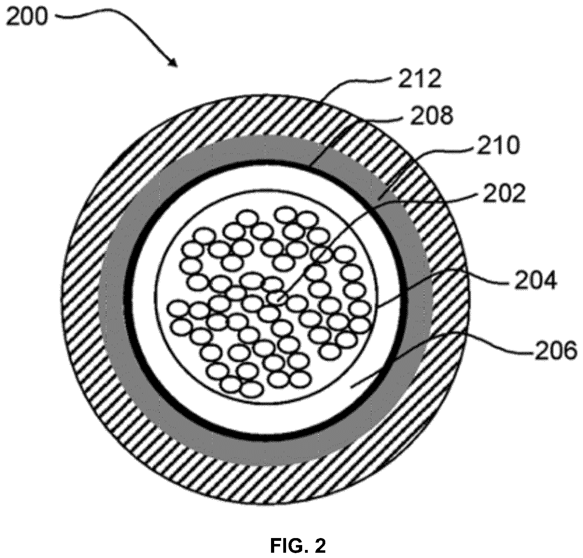

Fig. 2 and Fog. 3 are pictorial snapshots illustrating an example optical fiber cable with a compressed core in accordance with one or more embodiment of the present disclosure. The optical fiber cable 200, 300 have a plurality of optical transmission elements 202, 302 in form of one or more bundles of IBRs 204, 304 in the compressed core 206, 306.

In an aspect of the disclosure, the number of the plurality of optical transmission elements 202, 302 maybe 432. Alternatively, the number of the plurality of optical transmission elements 202, 302 may vary.

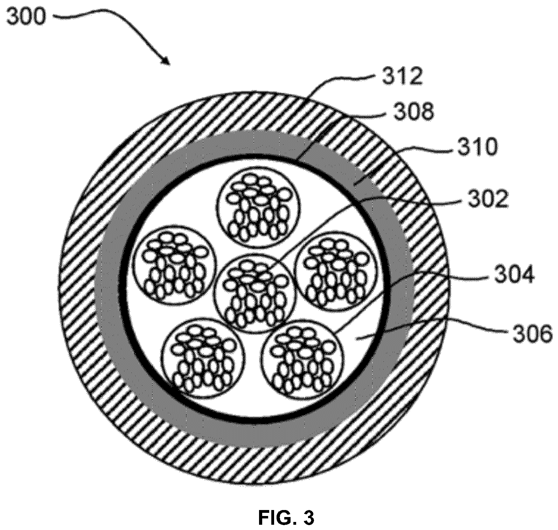

The number of bundles of IBRs 204, 304 maybe 1 (as shown in Fig. 2). Alternatively, the number of the bundles of IBRs 204, 304 may be 6 (as shown in Fig. 3). Alternatively, the number of bundles of IBRs 204, 304 may vary.

The optical fiber may be of the ITU.T G.657.A2 category. Alternatively, the optical fiber may be of ITU.T G.657.A1 or G.657.B3 or G.652.D or other suitable categories.

In accordance with an embodiment of the present disclosure, the optical fiber is a bend-insensitive fiber having less degradation in optical properties or less increment in optical attenuation during bending of an optical fiber cable. Particularly, the bend-insensitive fiber further helps to maintain the optical properties during multiple winding/unwinding operations of the optical fiber cable.

The optical fibers may be coloured fiber and/or single-core optical fiber, and/or multi-core optical fiber, and/or single-mode optical fiber, and/or multimode optical fiber or the like. Particularly, the single-mode optical fiber carries only a single mode of light and the multimode optical fiber carries multiple modes of light to propagate. Moreover, the multicore optical fibers comprise multiple cores. Further, the single-core optical fiber comprises only a single core.

In accordance with an embodiment of the present disclosure, each of the plurality of optical transmission elements 202, 302 have a diameter ranging from 140μm to 260μm. In particular, one or more bundles of IBRs 204, 304 are encapsulated by a first layer 208, 308. The first layer 208, 308 may be surrounded by a second layer 210, 310. Moreover, the second layer 210, 310 surrounds the first layer 208, 308 such that fiber packing density is greater than or equal to 0.35. Further, the first layer 208, 308 and the second layer 210, 310 may be at least one or more layers of binders, aramid yarns, glass roving yarns, water-swellable yarns, water blocking tape, fire retardant (protection) tape, cushioning layer, metal tape, loose tube, for example. The first layer 208, 308 and the second layer 210, 310 may be optional layers.

In accordance with an embodiment of the present disclosure, the first layer 208, 308 and/or the second layer 210, 310 is surrounded by a third layer 212, 312. The third layer 212, 312 maybe a jacket or sheath extruded using a sheathing process. In particular, the sheathing material for the sheath include but is not limited to, polyvinylchloride, polyethylene (such as High-Density Poly Ethylene (HDPE), Medium Density Poly Ethylene, and Low-Density Poly Ethylene), polyurethane, thermoplastic rubber/elastomer, thermoplastic chlorinated polyethylene, nylon, polypropylene or combination thereof.

In an exemplary aspect, if the first layer 208, 308 and the second layer 210, 310 are not present in the optical fiber cable 200, 300, the third layer 212, 312 surrounds the compressed core 206, 306.

It may be noted the optical fiber cables 200, 300 may contain one or more layers depending upon requirement and implementation. Non-limiting examples of one or more layers may be water blocking tape, metal tape, dielectric armouring, yarns etc.

In accordance with an embodiment of the present disclosure, the third layer 212, 312 may have one or more strength members (not shown) embedded that may provide mechanical strength and stiffness to the optical fiber cable 200, 300. In particular, one or more strength members provides enhanced tensile strength and excellent crush protection/resistance performance. Moreover, one or more strength members may be made of, but not limited to, FRP (Fiber Reinforced Plastic), ARP (Aramid-Reinforced Plastic) or any other suitable dielectric/strength material. Further, one or more strength members may have a round shape, a flat shape or any other suitable shape. One or more strength members may be coated with EAA (Ethylene Acrylic Acid) or EVA (Ethylene-Vinyl Acetate) coating for better adhesion with the third layer 212, 312, i.e., to enhance the adhesion of one or more strength members with the third layer 212, 312.

In accordance with an embodiment of the present disclosure, the optical fiber cable 200, 300 with the compressed core 206, 306 may have a fiber packing density of greater than or equal to 0.35. The fiber packing density is defined as total cross-sectional area of all the optical transmission elements 202, 302 in the core 206, 306 of the optical fiber cable 200, 300 divided by a cross-sectional area of an inner surface of the sheath (the third layer 212, 312). In particular, core 206, 306 is compressed at least radially. The core 206, 306 may be compressed while providing the first layer 208, 308 and/or while extruding the sheath.

In accordance with an embodiment of the present disclosure, the core 206, 306 may be compressed at least 5% such that the optical attenuation of the plurality of optical transmission elements 202, 302 is less than 0.30dB/Km at 1550nm. The compression is measured by the reduction in inner diameter (D) of the sheath 212, 312.

Below are a few use cases depicting compression of the core 206, 306. The compression of the core 206, 306 may be done by reducing a diameter of one or more bundles of IBRs 204, 304, where Δd/d is greater than or equal to 0.05, meaning that the compression is at least 5%.

A diameter (d) of the core 206, 306 is conceptualized as a minimum diameter of an imaginary circle (di) which can enclose all the optical transmission elements 202, 302 of the core 206, 306 and additionally having a free space to accommodate bundled cylindrical-shaped optical transmission elements 202, 302 without optical attenuation or mechanical degradation. The inner diameter (D) of the sheath 212, 312 may be calculated as a diameter core 206, 306 in addition to the thickness (t) of one or more peripheral elements such as water blocking tape, binder yarns, strength elements, fire protection tape, metal tape etc. The peripheral elements are optional, may vary in numbers and contribute only a small fraction in diameter of the sheath, therefore, thickness (t) may be neglected for calculation and inner diameter (D) of the cable may be considered equivalent to the diameter of the core (d). For example, the free space required to make the core 206, 306 of 250μm fibers may be kept around 15% for each bundle of optical transmission elements 202, 302 in the core 206, 306 and the free space required to make the core 206, 306 with 200μm fibers may be kept around 25% for each bundle in the core 206, 306.

Referring to Fig. 2, the core 206 having 432 optical transmission elements (250μm) in a single bundle of IBRs 204. The diameter of imaginary circle ($d_i$) is given as:

$$d_i = (1.155 * f_d * \sqrt{n})$$

$$d = d_i * f_s$$

$$D = d + t \approx d$$

Where, $f_d$ is diameter of the individual element of the core for i.e., optical transmission element
n - number of optical transmission elements in the core
fs - free space inside the core

$$d_i = 1.155 * 0.25 * \sqrt{432} = 6mm$$

$$d = 6 * 1.15 = 6.9mm$$

$$D \approx 6.9mm$$

With the compression tool, the core diameter may be reduced by 10%:

$$\Delta d = 6.9 * 0.1 = 0.69mm$$

$$d = 6.9 - 0.69 = 6.2mm$$

$$D \approx 6.2mm$$

The final cable inner diameter is reduced by 6.9 - 6.2 = 0.7mm.
Referring to Fig. 3, the core 306 having 432 optical transmission elements (200$\mu$m) in 6 bundles of IBRs 304 (72 optical transmission elements in each of the 6 bundles). The free space requirement is considered for individual bundle of 72 optical transmission elements and then for the entire core of 432 optical transmission elements as well.

$$d_i = 1.155 * (1.155 * 0.2 * \sqrt{72} * 1.25) * \sqrt{6} = 6.9mm$$

$$d = d_i * f_s = 6.9 * 1.25 = 8.6mm$$

With the compression tool, the core diameter may be reduced by 10%:

$$\Delta d = 8.6 * 0.1 = 0.86mm$$

$$d = 8.6 - 0.86 = 7.7mm$$

$$D \approx 7.7 = 7.7mm$$

The final cable inner diameter is reduced by 8.6 - 7.7 = 0.9mm.

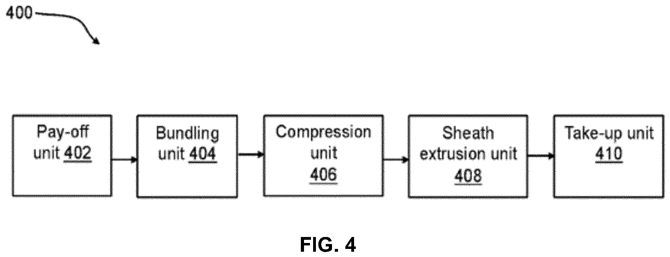

Fig. 4 is a block diagram illustrating of a system various units used for manufacturing an optical fiber cable in accordance with an embodiment of the present disclosure. System 400 includes a pay-off unit 402, a bundling unit 404, a compression unit 406, a sheath extrusion unit 408 and a take-up unit 410. In particular, the pay-off unit 402 is a rotating platform, vertical axis flyer type pay-off unit, horizontal axis flyer type pay-off unit, high-speed pay-off unit, for example. Moreover, the pay-off unit 402 is suitable to continually pay off the plurality of optical transmission elements 202, 302 to the bundling unit 404 to form one or more bundles of IBRs 204, 304. Further, the bundling of the plurality of optical transmission elements 202, 302 includes providing the first layer 208, 308 around the plurality of optical transmission elements 202, 302. One or more bundles of IBRs 204, 304 forms the core 206, 306 of the optical fiber cable 200, 300. Post bundling, the compression unit 406 with the compression tool compress the core 206, 306 and the sheath extrusion unit 408 may extrude the sheath 212, 312 around the compressed core206, 306. The take-up unit 410 delivers the final optical fiber cable 200, 300 with the compressed core 206, 306.

Although FIG. 4 shows various units used for manufacturing the optical fiber cable 200, 300 it is to be understood that other alternatives are not limited thereon. In other implementations, the system 400may include fewer or more components. Further, the labels or names of the components are used only for illustrative purpose and does not limit the scope of the present disclosure. One or more components may be combined together to perform the same or substantially similar function in the manufacturing process.

The shape and size of the various elements in the optical fiber cable200, 300 do not limit the scope of the present disclosure. The length, the width and the height of the various elements in the optical fiber cable200, 300 may vary.

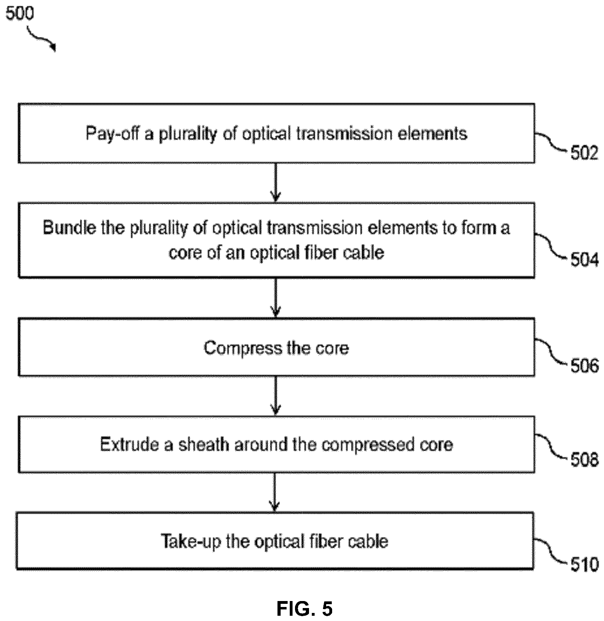

Fig. 5 is a flow chart illustrating a method for manufacturing the optical fiber cable in accordance with an embodiment of the present disclosure. The flow chart 500 starts at step 502.

At step 502, the pay-off unit 402 continuosly pay-off the plurality of optical transmission elements 202, 302 to the bundling unit 404 to form one or more bundles of IBRs 204, 304

At step 504, the plurality of optical transmission elements 202, 302 is bundled. The may plurality of optical transmission elements 202, 302 further comprise providing the first layer 208, 308 around the plurality of optical transmission elements202, 302. One or more bundles of IBRs 204, 304 form the core 206, 306 of the optical fiber cable 200, 300.

At step 506, post bundling the compression unit 406 with the compression tool compresses the core 206, 306.

At step 508, the sheath extrusion unit 408 extrude the sheath around the compressed core206, 306.

At step 510, the take-up unit 410 delivers the final optical fiber cable 200, 300 with the compressed core 206, 306.

The various actions, acts, blocks, steps, or the like in the flow diagram 500 may be performed in the order presented, in a different order or simultaneously. Further, in some embodiments, some of the actions, acts, blocks, steps, or the like may be omitted, added, modified, skipped, or the like without departing from the scope of the disclosure.

The proposed disclosure advantageously introduces a modified manufacturing tool to compress a core of an optical fiber cable, thereby reducing the diameter of the optical fiber cable without increasing optical losses such as attenuation or without any mechanical degradation. The diameter reduction results in a lightweight optical fiber cable. Further, the core compressed results in the optical fiber cable that is easy to handle and blow.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

**Claims**

1. A method of manufacturing an optical fiber cable (200, 300), **characterized in that** steps of:

    bundling a plurality of optical transmission elements (202, 302) to form a core (206, 306) of the optical fiber cable (200, 300);
    compressing the core (206, 306); and
    extruding a sheath (212, 312) around the compressed core (206, 306), wherein the core (206, 306) is compressed to a smaller diameter by a compression tool, wherein the compression tool has a cylindrical cavity, wherein the core (206, 306) enters from the first end of the compression tool with a diameter d and exits from the second end with a diameter d-Δd, such that Δd/d is greater than or equal to 0.05.

2. The method as claimed in claim 1, wherein an internal diameter of the cylindrical cavity gradually decreases from a first end to a second end of the compression tool,

3. The method as claimed in claim 1, wherein bundling the plurality of optical transmission elements (202, 302) comprises providing a first layer (208, 308) around the plurality of optical transmission elements (202, 302).

4. The method as claimed in claim 2, wherein the core (206, 306) is compressed while providing the first layer (208, 308).

5. The method as claimed in claim 1, wherein the core (206, 306) is compressed while extruding the sheath (212, 312).

6. The method as claimed in claim 1, wherein at least one second layer (210, 310) of binders, aramid yarns, glass roving yarns, water-swellable yarns, a water blocking tape, a metal tape, fire retardant tape, cushioning layer and a loose tube

7. The method as claimed in claim 6, wherein the at least one second layer (210, 310) is applied before extruding the sheath (212, 312).

8. The method as claimed in claim 1, wherein the sheath (212, 312) is extruded around a first layer (208, 308) or a second layer (210, 310) such that a fiber packing density is greater than or equal to 0.35.

9. The method as claimed in claim 1, wherein the fiber packing density is defined as atotal cross sectional area of all of the plurality of optical transmission elements (202, 302) in the core (206, 306) of the optical fiber cable (200, 300) divided by a cross sectional area of an inner surface of the sheath (212, 312).

10. The method as claimed in claim 1, wherein the core (206, 306) is compressed at least radially.

11. The method as claimed in claim 1, wherein the core (206, 306) is compressed at least 5% such that an optical attenuation of the plurality of optical transmission elements (202, 302) is less than 0.30dB/Km at 1550nm,

12. The method as claimed in claim 11, wherein the compression is measured by a reduction in an inner diameter of the sheath (212, 312).

13. An optical fiber cable (200, 300) **characterized in that**:

a compressed core (206, 306) having a plurality of optical transmission elements (202, 302); and
an extruded sheath (212, 312) surrounding the compressed core (206, 306).

14. The optical fiber cable (200, 300) as claimed in claim 13, wherein the optical fiber cable (200, 300) further comprising a first layer (208, 308) around the plurality of optical transmission elements (202, 302).

15. The optical fiber cable (200, 300) as claimed in claim 13, wherein at least one second layer (210, 310) of binders, aramid yarns, glass roving yarns, water swellable yarns, a water blocking tape, a metal tape, and a loose tube is applied before extruding the sheath (212, 312).

**FIG. 1**

FIG. 2

FIG. 3

400

```
┌──────────┐   ┌──────────┐   ┌──────────┐   ┌──────────┐   ┌──────────┐
│ Pay-off  │→  │ Bundling │→  │Compression│→ │  Sheath  │→  │Take-up unit│
│ unit 402 │   │ unit 404 │   │   unit    │   │extrusion unit│ │   410    │
│          │   │          │   │   406     │   │   408    │   │          │
└──────────┘   └──────────┘   └──────────┘   └──────────┘   └──────────┘
```

**FIG. 4**

500

| Pay-off a plurality of optical transmission elements | 502 |

↓

| Bundle the plurality of optical transmission elements to form a core of an optical fiber cable | 504 |

↓

| Compress the core | 506 |

↓

| Extrude a sheath around the compressed core | 508 |

↓

| Take-up the optical fiber cable | 510 |

**FIG. 5**

Europäisches
Patentamt

European
Patent Office

Office européen
des brevets

# EUROPEAN SEARCH REPORT

**Application Number**

EP 22 21 6296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 784 462 A (PRIAROGGIA PAOLO G [IT]) 15 November 1988 (1988-11-15) | 1,2,5-15 | INV. G02B6/44 |
| Y | * abstract; figures 1-3 * <br> * column 6, lines 44-46,55-57,67 * <br> * column 5, line 9 - line 36; figure 2 * | 3,4 | |
| Y | US 5 995 702 A (TJOENNELAND SOEREN [DK]) 30 November 1999 (1999-11-30) <br> * claims 11,17; figure 12 * <br> ----- | 3,4 | |
| A | US 2013/084047 A1 (BAUCOM JAMES LEE [US] ET AL) 4 April 2013 (2013-04-04) <br> * paragraphs [0048], [0062]; figures 3,3a * <br> ----- | 1,13 | |
| A | US 2015/293320 A1 (HURLEY WILLIAM CARL [US] ET AL) 15 October 2015 (2015-10-15) <br> * abstract; figures 1-2 * <br> ----- | 1,13 | |
| A | US 2016/306129 A1 (HURLEY WILLIAM CARL [US] ET AL) 20 October 2016 (2016-10-20) <br> * abstract; figure 1 * <br> ----- | 1,13 | TECHNICAL FIELDS SEARCHED (IPC) <br><br> G02B |
| A | US 2006/072893 A1 (WIED ACHIM [DE] ET AL) 6 April 2006 (2006-04-06) <br> * abstract; figures 1A,1B,2A,2B * <br> ----- | 1,13 | |

The present search report has been drawn up for all claims

| Place of search | Date of completion of the search | Examiner |
|---|---|---|
| The Hague | 11 May 2023 | Lehtiniemi, Henry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6296

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2023

| Patent document cited in search report | | | Publication date | Patent family member(s) | | | Publication date |
|---|---|---|---|---|---|---|---|
| US 4784462 | A | | 15-11-1988 | AR | 241835 | A1 | 30-12-1992 |
| | | | | AT | 82401 | T | 15-11-1992 |
| | | | | AU | 580912 | B2 | 02-02-1989 |
| | | | | BR | 8702756 | A | 01-03-1988 |
| | | | | CN | 87103630 | A | 06-01-1988 |
| | | | | DK | 251887 | A | 20-11-1987 |
| | | | | EP | 0246543 | A2 | 25-11-1987 |
| | | | | FI | 872185 | A | 20-11-1987 |
| | | | | IT | 1189524 | B | 04-02-1988 |
| | | | | JP | S62295009 | A | 22-12-1987 |
| | | | | KR | 870011484 | A | 23-12-1987 |
| | | | | NO | 172157 | B | 01-03-1993 |
| | | | | NZ | 220368 | A | 27-07-1989 |
| | | | | US | 4784462 | A | 15-11-1988 |
| US 5995702 | A | | 30-11-1999 | NONE | | | |
| US 2013084047 | A1 | | 04-04-2013 | AU | 2012315847 | A1 | 20-03-2014 |
| | | | | AU | 2016200100 | A1 | 04-02-2016 |
| | | | | BR | 112014007088 | A2 | 28-03-2017 |
| | | | | CN | 103814320 | A | 21-05-2014 |
| | | | | CN | 107367804 | A | 21-11-2017 |
| | | | | EP | 2761350 | A1 | 06-08-2014 |
| | | | | RU | 2014117336 | A | 10-11-2015 |
| | | | | US | 2013084047 | A1 | 04-04-2013 |
| | | | | US | 2016018613 | A1 | 21-01-2016 |
| | | | | US | 2017131497 | A1 | 11-05-2017 |
| | | | | US | 2018252882 | A1 | 06-09-2018 |
| | | | | US | 2019121043 | A1 | 25-04-2019 |
| | | | | US | 2019285819 | A1 | 19-09-2019 |
| | | | | WO | 2013049484 | A1 | 04-04-2013 |
| US 2015293320 | A1 | | 15-10-2015 | CN | 102782551 | A | 14-11-2012 |
| | | | | EP | 2513695 | A1 | 24-10-2012 |
| | | | | US | 2012243841 | A1 | 27-09-2012 |
| | | | | US | 2014199036 | A1 | 17-07-2014 |
| | | | | US | 2015293320 | A1 | 15-10-2015 |
| | | | | WO | 2011081771 | A1 | 07-07-2011 |
| US 2016306129 | A1 | | 20-10-2016 | AU | 2016100980 | A4 | 28-07-2016 |
| | | | | BR | 212016015387 | U2 | 27-09-2016 |
| | | | | CN | 106104346 | A | 09-11-2016 |
| | | | | EP | 3090298 | A1 | 09-11-2016 |
| | | | | EP | 3367150 | A1 | 29-08-2018 |
| | | | | RU | 175764 | U1 | 18-12-2017 |
| | | | | US | 2016306129 | A1 | 20-10-2016 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 21 6296

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2023

| Patent document cited in search report | Publication date | Patent family member(s) | | Publication date |
|---|---|---|---|---|
| | | WO | 2015102819 A1 | 09-07-2015 |
| US 2006072893 A1 | 06-04-2006 | CN | 1766685 A | 03-05-2006 |
| | | DE | 102004048741 B3 | 18-05-2006 |
| | | EP | 1645895 A1 | 12-04-2006 |
| | | JP | 2006106755 A | 20-04-2006 |
| | | KR | 20060052052 A | 19-05-2006 |
| | | US | 2006072893 A1 | 06-04-2006 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202111061474
- CN 105729754 B

- JP 2017026754 A